# EUROPÄISCHE PATENTSCHRIFT

(11) **EP 0 997 716 B1**
(45) Veröffentlichungstag und Bekanntmachung des Hinweises auf die Patenterteilung: **10.01.2007**
(21) Anmeldenummer: 99120486.8
(22) Anmeldetag: 15.10.1999
(51) Int. Cl.: G01K 7/02

(54) **Eintausch-Messsonde zur Messung in Flüssigkeiten**
Fluid immersion probe
Sonde de mesure à immersion dans un fluide

(30) Priorität: 27.10.1998 DE 19849433
(43) Veröffentlichungstag der Anmeldung: 03.05.2000
(73) Patentinhaber: Heraeus Electro-Nite International N.V., 3530 Houthalen (BE)
(72) Erfinder: Theuwis, Alfons Lampert M. C., 3520 Zonhoven (BE)
(74) Vertreter: Kühn, Hans-Christian

(56) Entgegenhaltungen:
- GB-A- 1 095 106
- US-A- 3 505 871
- US-A- 5 584 578

## Beschreibung

Die Erfindung betrifft eine Eintauch-Meßsonde zur Messung in Flüssigkeiten, insbesondere in Metallschmelzen, mit einem Trägerrohr, einem Meßkopf, der an einem Ende des Trägerrohres gehaltert ist, wobei an dem Meßkopf Meßelemente sowie Signalleitungen für die von den Meßelementen erzeugten Meßsignale angeordnet sind, wobei die Signalleitungen länger sind als das Trägerrohr und von dem dem Inneren des Trägerrohres zugewandten Ende des Meßkopfes ausgehend verlaufen und wobei die Signalleitungen durch das Innere des Trägerrohres verlaufen und im Inneren des Trägerrohres um dessen Längsachse herum aufgewickelt sind.

Derartige Meßsonden sind aus US 3,505,871 bekannt. Sie werden zur Messung in Stahl-Konverter-Öfen (Konvertern) benutzt. Bei Messungen in Konvertern wird dabei die Meßsonde aus einer relativ großen Höhe in den Konverter hinein fallengelassen. Die Signalleitungen sind an der inneren Oberfläche des Trägerrohres aufgewickelt, sie wickeln sich im freien Fall der Meßsonden selbsttätig ab, wobei ein Ende der Signalleitung mit dem Meßkopf verbunden ist, während das andere Ende der Signalleitung entweder über ein Kontaktstück über Verlängerungs- oder Ausgleichsleitungen oder direkt mit einer Meß- und Auswerteeinrichtung verbunden ist. Auf diese Weise können mehrere Meßsonden in großer Höhe über dem Konverter magaziniert gelagert werden, wobei für die Messungen jeweils eine Meßsonde aus dem Magazin freigegeben wird und im freien Fall in die im Konverter befindliche Metallschmelze fällt.

Ähnliche Einrichtungen sind aus US 5,584,578 bekannt, wobei die Signalleitungen auf der äußeren Oberfläche des Trägerrohres aufgewickelt sind.

Ähnliche Einrichtungen sind weiterhin aus US 5,168,764 oder aus I&SM, September 1993, bekannt. Die hier offenbarten Meßsonden werden in Magazinen aufgehängt, wobei es aus US 5,168,764 bekannt ist, die Signalleitungen nicht direkt um das Trägerrohr der Meßsonde herum, sondern in einem separaten Behälter zu wickeln. Dies bewirkt, daß in den Magazinen neben der jeweiligen Meßsonde auch der Vorratsbehälter für die Signalleitung gehaltert sein muß, so daß die Magazine entsprechend groß ausgelegt werden müssen.

Aus EP 0 375 109 A2 ist eine ähnliche Meßsonde bekannt. Die hier offenbarte Meßsonde weist eine außerhalb des Meßkopfes angeordnete Probenkammer auf, die an einem durch ein Rohr parallel zu dem Trägerrohr geführten Stahlseil gehaltert ist. Das Stahlseil ist auf einer Spule aufgewickelt und kann bei Absenken des Meßkopfes abgewickelt werden.

Ausgehend von dem bekannten Stand der Technik liegt der Erfindung die Aufgabe zugrunde, eine verbesserte Meßsonde zu schaffen, die sehr einfach und sicher handhabbar ist und deren Handhabung leicht automatisiert werden kann.

Diese Aufgabe wird erfindungsgemäß durch die Meßsonde gemäß Anspruch 1 gelöst, und insbesondere in dem die Signalleitungen mehrlagig gegen die Innenwand des Trägerrohres gewickelt werden und daß in Längsrichtung des Trägerrohres direkt vor der Wicklung der Signaiieitungen ein Fixierstopfen an den Wicklungen anliegend angeordnet ist mit mindestens einem Durchlaß für die Signalleitungen. Dadurch können sehr lange Signalleitungen auf einem kleinen Raum sehr platzsparend untergebracht werden, wobei eine Beeinträchtigung oder Beschädigung der Wicklungen durch die geschützte Lage im Inneren des Trägerrohres nahezu ausgeschlossen ist, so daß eine sichere Handhabung gewährleistet ist. Durch die stabile äußere Oberfläche können mehrere derartiger Meßsonden in Stapelmagazinen platzsparend angeordnet werden; eine hängende Anordnung, jeweils beabstandet voneinander, ist nicht notwendig. Sobald die Sonde aus einem Magazin in die Tiefe des Konverters fallengelassen wird, wickelt sich die Signalleitung aufgrund ihrer Verbindung zu einer Meß- oder Auswerteeinrichtung aus dem Trägerrohr heraus ab. Durch die Abwicklung aus dem Rohr heraus sind aufwendige Vorkehrungen zur Verhinderung von Schlingerbewegungen des Meßkopfes bzw. des Trägerrohres auf dem Weg nach unten überflüssig. Dabei wird eine stabile und platzsparende Halterung der Wicklungen erreicht.

Zweckmäßigerweise sind die Signalleitungen in einem Signalkabel angeordnet, wobei eine Vielzahl unterschiedlicher Signalleitungen zu einem einzigen Strang zusammengefaßt werden. Die Signalleitungen können an dem dem Meßkopf abgewandten Ende des Trägerrohres mit einem Kontaktstück verbunden und/oder durch dieses Ende des Trägerrohres hindurch verlaufend ausgebildet sein.

Vorteilhafterweise sind in Längsrichtung des Trägerrohres direkt vor und hinter der Wicklung der Signalleitungen Fixierstopfen an den Wicklungen anliegend angeordnet mit jeweils mindestens einem Durchlaß für die Signalleitungen. Durch diese Fixierstopfen wird die Lage der Wicklungen gesichert, so daß diese nicht beim Transport oder bei der Handhabung durcheinander fallen und damit den freien Fall der Meßsonde behindern. Die Durchlässe in den Fixierstopfen ermöglichen ein freies Hindurchgleiten der Signalleitungen beim Abwickeln der Wicklungen im freien Fall. Entsprechend der Länge der Signalleitungen, also entsprechend der Höhe der Gesamtwicklung, können die Fixierstopfen an unterschiedlichen Stellen innerhalb des Trägerrohres angeordnet sein.

Zweckmäßigerweise ist der Meßkopf lösbar, vorzugsweise mit Rastelementen, in dem Trägerrohr gehaltert, so daß der Meßkopf nach seinem Lösen aus dem Trägerrohr die Signalleitung hinter sich her aus dem Trägerrohr herauszieht. Für Messungen in Metallschmelzen hat es sich als zweckmäßig erwiesen, daß die Rastelemente den Meßkopf bei einer in Achsrichtung des Trägerrohres gerichteten Kraft von etwa 300 N - 600 N freigeben. Desweiteren ist es zweckmäßig, daß die Rastelemente des Meßkopfes an Rastelemente eines Fixierstopfens angreifen.

Der Meßkopf kann wenigstens ein Thermoelement und/oder wenigstens ein elektrochemisches Meßelement, insbesondere zur Messung von Sauerstoff, aufweisen, so daß kombinierte Messungen mehrerer Parameter möglich sind.

Um ein ungehindertes Eintauchen und Verbleiben des Meßkopfes in der Flüssigkeit zu gewährleisten, weist der Meßkopf vorzugsweise eine Dichte auf, die größer oder gleich der vorher bestimmten Dichte der zu messenden Flüssigkeit ist.

Die Signalleitungen sind in der Regel etwa 10 - 50 mal, in vielen Fällen insbesondere 25 - 45 mal so lang wie die Länge der Meßsonde.

Zum Schutz der Meßelemente bei der Handhabung der Meßsonde und beim Eintauchen des Meßkopfes weist der Meßkopf eine Schutzkappe auf, die mindestens die Meßelemente umfaßt und die aus einem sich in der Flüssigkeit auflösenden oder aufschmelzenden Material gebildet ist.

Nachfolgend wird ein Ausführungsbeispiel der Erfindung anhand einer Zeichnung näher erläutert.

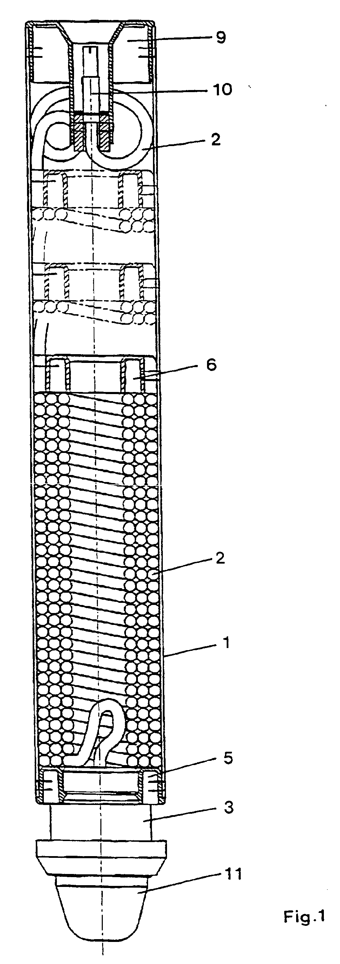

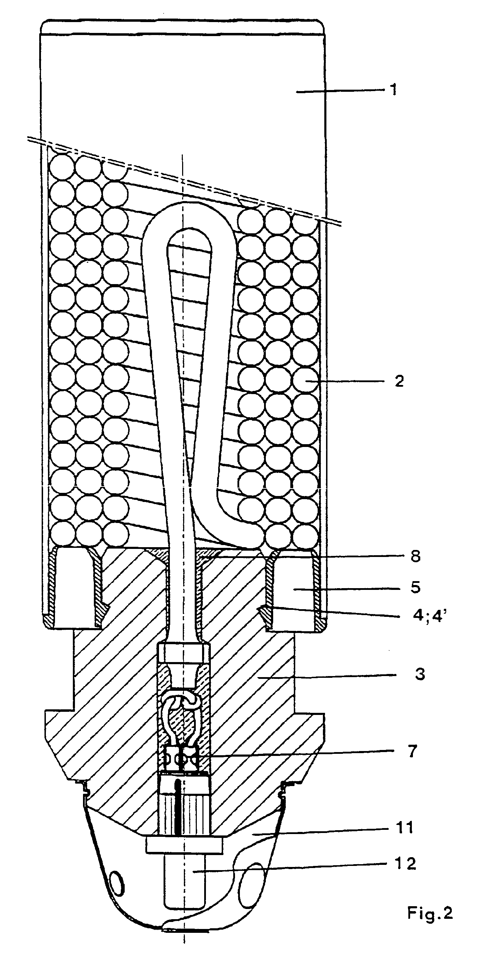

Figur 1 zeigt eine erfindungsgemäße Eintauch-Meßsonde mit geschnittenem Trägerrohr Figur 2 zeigt einen Schnitt durch den vorderen Teil der Eintauch-Meßsonde gemäß Figur 1.

Die Eintauch-Meßsonde weist ein Trägerrohr 1 auf, das beispielsweise aus Pappe gebildet sein kann. Im Inneren des Trägerrohres 1 ist, von einem Ende beginnend, ein Signalkabel 2 aufgewickelt, wobei die äußere Lage der Wicklung an der inneren Oberfläche des Trägerrohres 1 anliegt. In dem Signalkabel 2 sind die in der Zeichnung nicht einzeln dargestellten Signalleitungen zusammengefaßt. Die in dem Signalkabel 2 angeordneten Signalleitungen sind mit diesem zusammen an ihrem einen Ende an einem Meßkopf 3 befestigt. Der Meßkopf 3 ist in einem Ende des Trägerrohres 1 gehaltert. Er ist dort mittels Rastelementen 4 des Meßkopfes 3 und Rastelementen 4' eines Fixierstopfens 5 in diesem Fixierstopfen 5 gehaltert. Der Fixierstopfen 5 wiederum ist in dem Trägerrohr 1 fixiert. Unmittelbar an dem Fixierstopfen 5 anliegend folgt die Wicklung des Signalkabels 2 in der gewünschten Länge, beispielsweise etwa 20 - 30 m. Im Anschluß an die Wicklungen ist ein zweiter Fixierstopfen 6 angeordnet, der gemeinsam mit dem ersten Fixierstopfen 5 sichert, daß die Wicklungen nicht zerstört werden vor dem bestimmungsgemäßen Gebrauch der Eintauch-Meßsonde. Dementsprechend ist die Lage des zweiten Fixierstopfens 6 innerhalb des Trägerrohres 1 abhängig von der Länge des Signalkabels 2. In Figur 1 ist die Lage des zweiten Fixierstopfens 6 für mehrere verschiedene Signalkabellängen schematisch dargestellt. Die Wicklungen sind von dem zweiten Fixierstopfen 6 ausgehend an der Innenwand des Trägerrohres 1 entlang gewickelt in Richtung Trägerrohr-Vorderende, zum Meßkopf 3 hin. Von dort wird eine zweite Wicklung in die entgegengesetzte Richtung zum zweiten Fixierstopfen 6 hin geführt und von dort ausgehend eine dritte Wicklung, als innere Wicklung bis zum ersten, am Meßkopf 3 angeordneten Fixierstopfen 5. Von dort ist das Signalkabel 2 bogenförmig verlaufend mit den Kontaktstellen 7 der Meßelemente im Inneren des Meßkopfes 3 verbunden. Diese Verbindungsstelle verläuft in der Längsachse des Trägerrohres 1 durch einen entsprechende axiale Öffnung 8 in dem Meßkopf 3.

Am entgegengesetzten Ende der Wicklung ist das Signalkabel 2 durch eine der Innenwand des Trägerrohres 1 benachbarte Öffnung des zweiten Fixierstopfens 6 hindurchgeführt in Richtung des zweiten Endes des Trägerrohres 1. Dieses zweite Ende des Trägerrohres 1 ist durch einen Stopfen 9 verschlossen, in dem ein Kontaktstück 10 angeordnet ist. Das Kontaktstück 10 dient der nicht dargestellten Kontaktierung der in dem Signalkabel 2 angeordneten Signalleitungen mit einem Verlängerungs- oder Ausgleichskabel mit einer Meßwertanzeige- und Auswerteeinheit.

In Figur 2 ist die Anordnung des Meßkopfes 3 in dem Trägerrohr 1 detalliert dargestellt. Der Meßkopf 3 trägt eine äußere Schutzkappe 11 zum mechanischen Schutz der Meßelemente, unter anderem beim Aufschlag des Meßkopfes 3 auf die Oberfläche der zu messenden Metallschmelze. Im Falle einer Messung in Stahlschmelzen kann die Schutzkappe 11 ebenfalls aus Stahl gebildet sein. Innerhalb dieser an der Außenseite des Meßkopfes 3 befestigten Schutzkappe 11 ist, unmittelbar um die Meßelemente herum eine weitere Schutzkappe 12 angeordnet, die sich nach Durchgang des Meßkopfes 3 durch eine eventuelle Schlackeschicht ebenfalls auflöst und die in der Figur nicht dargestellten Meßelemente der Einwirkung der Schmelze freigibt. Die Meßelemente selbst sind als übliche und dem Fachmann wohlbekannte Meßelemente beispielsweise Thermoelemente oder Festelektrolyt-Sauerstoffmeßzellen ausgebildet.

Im Betrieb wird die Eintauch-Meßsonde aus einem Magazin, beispielsweise einem Stapelmagazin heraus freigegeben. Sie fällt im freien Fall nach unten, wobei sich das Signalkabel 2 aus der Wicklung löst. Durch die Befestigung des rückwärtigen Endes der Eintauch-Meßsonde an einer Meßwertanzeige- und Auswerteeinrichtung über das Kontaktstück 10 und den Stopfen 9 kann das Trägerrohr nur eine begrenzte Strecke fallen. Der Fallweg hängt von der Länge der Verbindungsleitung zu der Meßanzeige- und Auswerteeinrichtung ab. Bei Erreichen dieses maximalen Fallweges des Trägerrohres 1 stoppt dessen Bewegung plötzlich, auf den Meßkopf 3 wirkt eine Kraft, die ihn aus dem ersten Fixierstopfen 5 herausreißt, so daß er die Fallbewegung fortsetzt, wobei er das Signalkabel 2 aus der Wicklung heraus hinter sich her zieht.

Der Meßkopf 3 ist relativ kompakt und bis auf die Öffnung zur Aufnahme des Signalkabels 2 bzw. der Meßelemente und ihrer Verbindung zum Signalkabel 2 massiv aus Stahl gebildet. Er taucht deshalb beim Aufschlag auf die Schmelzenoberfläche tief in diese hinein, so daß nach dem Eintauchen des Meßkopfes 3 in die Schmelze gemessen werden kann.

## Patentansprüche

1. Eintauch-Meßsonde zur Messung in Flüssigkeiten, insbesondere in Metallschmelzen, mit einem Trägerrohr (1), einem Meßkopf (3), der an einem Ende des Trägerrohres gehaltert ist, wobei an dem Meßkopf Meßelemente sowie Signalleitungen für die von den Meßelementen erzeugten Meßsignale angeordnet sind, wobei die Signalleitungen länger sind als das Trägerrohr und von dem dem Inneren des Trägerrohres zugewandten Ende des Meßkopfes ausgehend verlaufen und wobei die Signalleitungen durch das Innere des Trägerrohres (1) verlaufen und im Inneren des Trägerrohres (1) um dessen Längsachse herum aufgewickelt sind, **dadurch gekennzeichnet, daß** die Signalleitungen mehrlagig gegen die Innenwand des Trägerrohres (1) gewickelt sind und daß in Längsrichtung des Trägerrohres (1) an dem dem Meßkopf (3) zugewandten Ende direkt vor der Wicklung der Signalleitungen ein Fixierstopfen (5) an den Wicklungen anliegend angeordnet ist mit mindestens einem Durchlaß für die Signalleitungen.

2. Eintauch-Meßsonde nach Anspruch 1, **dadurch gekennzeichnet, daß** die Signalleitungen in einem Signalkabel (2) angeordnet sind.

3. Eintauch-Meßsonde nach Anspruch 1 oder 2, **dadurch gekennzeichnet, daß** die Signalleitungen an dem dem Meßkopf (3) abgewandten Ende des Trägerrohres (1) mit einem Kontaktstück (9) verbunden sind und/oder durch dieses Ende hindurch verlaufend ausgebildet sind.

4. Eintauch-Meßsonde nach Anspruch 1, **dadurch gekennzeichnet, daß** in Längsrichtung des Trägerrohres (1) direkt hinter der Wicklung der Signalleitungen ein Fixierstopfen (6) an den Wicklungen anliegend angeordnet sind mit mindestens einem Durchlaß für die Signalleitungen.

5. Eintauch-Meßsonde nach einem der Ansprüche 1 bis 4, **dadurch gekennzeichnet, daß** der Meßkopf (3) lösbar, vorzugsweise mit Rastelementen (4), in dem Trägerrohr (1) gehaltert ist.

6. Eintauch-Meßsonde nach Anspruch 5, **dadurch gekennzeichnet, daß** die Rastelemente (4) den Meßkopf (3) bei einer in Achsrichtung gerichteten Kraft von etwa 300 N - 600 N freigeben.

7. Eintauch-Meßsonde nach den Ansprüchen 4 und 5, **dadurch gekennzeichnet, daß** die Rastelemente (4) des Meßkopfes (3) an Rastelementen (4) eines Fixierstopfens angreifen.

8. Eintauch-Meßsonde nach einem der Ansprüche 1 bis 9, **dadurch gekennzeichnet, daß** an dem Meßkopf (3) wenigstens ein Thermoelement und/oder wenigstens ein elektrochemisches Meßelement, insbesondere zur Messung von Sauerstoff, angeordnet ist.

9. Eintauch-Meßsonde nach einem der Ansprüche 1 bis 8, **dadurch gekennzeichnet, daß** der Meßkopf (3) eine Dichte aufweist, die größer oder gleich der vorher bestimmten Dichte der zu messenden Flüssigkeit ist.

10. Eintauch-Meßsonde nach einem der Ansprüche 1 bis 9, **dadurch gekennzeichnet, daß** die Länge der Signalleitungen 10 - 50 mal, insbesondere 25 - 45 mal, die Länge der Meßsonde aufweist.

11. Eintauch-Meßsonde nach einem der Ansprüche 1 bis 10, **dadurch gekennzeichnet, daß** der Meßkopf (3) eine Schutzkappe (11) aufweist, die mindestens die Meßelemente umfaßt und die aus einem sich in der Flüssigkeit aufschmelzenden oder auflösenden Material gebildet ist.

## Claims

1. Immersion measuring probe for measurement in liquids, in particular in molten metals, the probe having a carrier tube (1), a measuring head (3) mounted on one end of the carrier tube, wherein measuring elements as well as signal lines for the measuring signals generated by the measuring elements are arranged on the measuring head, wherein the signal lines are longer than the carrier tube and run from the end of the measuring head facing the inside of the carrier tube, and wherein the signal lines run through the inside of the carrier tube (1) and are wound up inside the carrier tube (1) around its longitudinal axis, **characterised in that** the signal lines are wound in multiple layers against the inside wall of the carrier tube (1) and **in that** in the longitudinal direction of the carrier tube (1) on its end facing the measuring head (3) and directly in front of the winding of the signal lines, a fixing stopper (5) with at least one passage for the signal lines is arranged lying against the windings.

2. Immersion measuring probe according to claim 1, **characterised in that** the signal lines are arranged in a signal cable (2).

3. Immersion measuring probe according to claim 1 or 2, **characterised in that** the signal lines at the end of the carrier tube (1) facing away from the measuring head (3) are connected to a contact piece (9) and/or are configured to run through this end.

4. Immersion measuring probe according to claim 1, **characterised in that** in the longitudinal direction of the carrier tube (1) directly behind the winding of the signal lines, a fixing stopper (6) with at least one passage for the signal lines is arranged lying against the windings.

5. Immersion measuring probe according to any one of claims 1 to 4, **characterised in that** the measuring head (3) is releasably mounted in the carrier tube (1), preferably with catch elements (4).

6. Immersion measuring probe according to claim 5, **characterised in that** in the catch elements (4) release the measuring head (3) under a force of approximately 300 N to 600 N directed in the axial direction.

7. Immersion measuring probe according to claims 4 and 5, **characterised in that** in the catch elements (4) of the measuring head (3) engage on catch elements (4) of a fixing stopper.

8. Immersion measuring probe according to any one of claims 1 to 7, **characterised in that** at least one thermocouple and/or at least one electrochemical measuring element, in particular for measuring oxygen, is arranged on the measuring head (3).

9. Immersion measuring probe according to any one of claims 1 to 8, **characterised in that** the measuring head (3) has a density, which is greater than or equal to the previously determined density of the liquid to be measured.

10. Immersion measuring probe according to any one of claims 1 to 9, **characterised in that** the length of the signal lines is 10 to 50 times, in particular 25 to 45 times, the length of the measuring probe.

11. Immersion measuring probe according to any one of claims 1 to 10, **characterised in that** the measuring head (3) has a protective cap (11), which encloses at least the measuring elements and which is formed from a material which melts or dissolves in the liquid.

## Revendications

1. Sonde de mesure à immersion dans des liquides, en particulier dans des métaux fondus, comportant un tube porteur (1), une tête de mesure (3) qui est retenue à une extrémité du tube porteur, des éléments de mesure et des lignes de signaux pour les signaux de mesure engendrés par les éléments de mesure étant agencés sur la tête de mesure, les lignes de signaux étant plus longues que le tube porteur et s'étendant depuis l'extrémité, tournée vers l'intérieur du tube porteur, de la tête de mesure, et les lignes de signaux s'étendant à l'intérieur du tube porteur (1) et étant enroulées à l'intérieur du tube porteur (1) autour de son axe longitudinal, **caractérisée en ce que** les lignes de signaux sont enroulées sur plusieurs couches contre la paroi intérieure du tube porteur (1) et **en ce qu'**en direction longitudinale du tube porteur (1), à l'extrémité tournée vers la tête de mesure (3) directement devant l'enroulement des lignes de signaux, un bouchon de fixation (5) est agencé en appui sur les enroulements avec au moins un passage pour les lignes de signaux.

2. Sonde de mesure à immersion selon la revendication 1, **caractérisée en ce que** les lignes de signaux sont agencées dans un câble de signaux (2)

3. Sonde de mesure à immersion selon la revendication 1 ou 2, **caractérisée en ce que** les lignes de signaux sont reliées à une pièce de contact (9) à l'extrémité du tube porteur (1) qui est tournée vers la tête de mesure (3) et/ou sont réalisées de manière à passer à travers cette extrémité.

4. Sonde de mesure à immersion selon la revendication 1, **caractérisée en ce qu'**en direction longitudinale du tube porteur (1), directement derrière l'enroulement des lignes de signaux, un bouchon de fixation (6) est agencé en appui sur les enroulements avec au moins un passage pour les lignes de signaux.

5. Sonde de mesure à immersion selon l'une des revendications 1 à 4, **caractérisée en ce que** la tête de mesure (3) est retenue détachable dans le tube porteur (1), de préférence avec des éléments d'enclenchement (4).

6. Sonde de mesure à immersion selon la revendication 5, **caractérisée en ce que** les éléments d'enclenchement (4) libèrent la tête de mesure (3) en cas de force d'approximativement 300 N à 600 N orientée en direction axiale.

7. Sonde de mesure à immersion selon les revendications 4 et 5, **caractérisée en ce que** les éléments d'enclenchement (4) de la tête de mesure (3) s'engagent sur des éléments d'enclenchement (4) d'un bouchon de fixation.

8. Sonde de mesure à immersion selon l'une des revendications 1 à 7, **caractérisée en ce que** sur la tête de mesure (3) est agencé au moins un élément thermique et/ou au moins un élément de mesure électrochimique, en particulier pour mesurer l'oxygène.

9. Sonde de mesure à immersion selon l'une des revendications 1 à 8, **caractérisée en ce que** la tête de mesure (3) présente une densité qui est supérieure ou égale à la densité préalablement déterminée du liquide à mesurer.

10. Sonde de mesure à immersion selon l'une des revendications 1 à 9, **caractérisée en ce que** la longueur des lignes de signaux est 10 à 50 fois, en particulier 25 à 45 fois la longueur de la sonde de mesure.

11. Sonde de mesure à immersion selon l'une des revendications 1 à 10, **caractérisé en ce que** la tête de mesure (3) présente un capuchon de protection (11) qui comprend au moins les éléments de mesure et qui entoure à partir d'un matériau qui fond ou qui se dissout dans le liquide.
